# EUROPÄISCHE PATENTSCHRIFT

(11) **EP 2 306 032 B1**
(45) Veröffentlichungstag und Bekanntmachung des Hinweises auf die Patenterteilung: **09.04.2014**
(21) Anmeldenummer: 10180550.5
(22) Anmeldetag: 28.09.2010
(51) Int. Cl.: F16B 5/02, F16B 25/10, E04D 12/00

(54) **Befestigungselement**
Fastening element
Elément de fixation

(30) Priorität: 02.10.2009 DE 102009049091
(43) Veröffentlichungstag der Anmeldung: 06.04.2011
(73) Patentinhaber: Adolf Würth GmbH & Co. KG, 74653 Künzelsau (DE); Würth International AG, 7004 Chur (CH)
(72) Erfinder: Kollmar, Frank, 74245, Löwenstein (DE); Krätschmer, Thomas, 74523, Schwäbisch Hall (DE); Reuther, Herbert, 74238, Gommersdorf (DE)
(74) Vertreter: Patentanwälte Ruff, Wilhelm, Beier, Dauster & Partner

(56) Entgegenhaltungen:
- EP-A1- 0 448 915
- EP-A1- 1 798 357
- CA-A1- 2 449 100
- DE-U1-202007 015 887
- US-A- 3 897 713

## Beschreibung

Die Erfindung betrifft ein Befestigungselement zur Befestigung an Dachkonstruktionen.

Klassische Dachkonstruktionen werden von schräg verlaufenden vom First zur Traufe führenden Sparren gebildet, auf denen Dämmmaterial angebracht ist, oberhalb dessen einer Konterlattung verläuft. Es gibt auch Fälle, bei denen die Konterlattung fehlt. An solchen Dachkonstruktionen sollen Gegenstände befestigt werden, beispielsweise Solarmodule. Hierzu gibt es entweder Klammern oder auch Profile, die an der Dachkonstruktion befestigt werden. Da das Dämmmaterial nicht ausreichend fest ist, muss die Festlegung in den Sparren erfolgen. Es handelt sich also um eine Abstandsbefestigung.

Hierzu werden Stockschrauben verwendet. Stockschrauben sind Schrauben, die an ihrem einen Ende eine Schraubenspitze und ein Holzgewinde oder Dübelgewinde aufweisen, während am anderen Ende ein metrisches Gewinde für eine Mutter vorhanden ist. Zwischen beiden Gewindeabschnitten ist ein Abschnitt mit Schlüsselflächen vorgesehen, um dort an der Stockschraube mit einem Werkzeug anfassen zu können, um sie einzuschrauben (DE 202005006491). Ebenfalls bekannt sind Stockschrauben, die an ihrem der Schraubenspitze abgewandten Ende in der dortigen Stirnfläche eine Antriebsvertiefung aufweisen.

**Bei einer weiteren bekannten Stockschraube ist zwischen dem Gewinde für die Mutter und dem Holzgewinde ein quer zur Schraubenlängsachse verlaufender Bund einstückig angebracht, der auf beiden Seiten eben ausgebildet ist und auf der dem Holz zugewandten Seite gegebenenfalls Sperrmittel zur Verhinderung des Mitdrehens aufweist (**CA 2449100 A1**).**

Der Erfindung liegt die Aufgabe zu Grunde, die Befestigungsmöglichkeiten, insbesondere für Solarmodule an Dachkonstruktionen, zu vereinfachen und zu verbessern.

Zur Lösung dieser Aufgabe schlägt die Erfindung ein Befestigungselement mit den im Anspruch 1 genannten Merkmalen und eine Befestigungsanordnung unter Verwendung eines solchen Befestigungselements vor. Weiterbildungen der Erfindung sind Gegenstand von Unteransprüchen.

Im Unterschied zu Stockschrauben sind hier die beiden Abschnitte, nämlich der die Schraubenspitze und das Holzgewinde aufweisende längere Abschnitt, der zum Einschrauben in die Dachkonstruktionen dient, und der zur Aufnahme einer Mutter dienende der Schraubenspitze abgewandte kürzere Schaftabschnitt durch einen Bund voneinander getrennt. Die der Schraubenspitze abgewandte Stirnfläche des Bunds ist als ebene Ringschulter ausgebildet. Sie bildet also ein Widerlager für eine Befestigungsklammer, ein Profil oder dergleichen, das an diesem Gewindeabschnitt mithilfe einer Mutter festgelegt wird. Es ist also nicht mehr erforderlich, wie dies im Stand der Technik üblich ist, vor dem Anbringen einer Klammer erst eine Mutter auf den Gewindeabschnitt aufzuschrauben.

In Weiterbildung der Erfindung **ist** vorgesehen, den die beiden Abschnitte trennenden Bund nach Art eines Senkkopfs auszugestalten, ihn also auf der der Dachkonstruktion zugewandten Seite kegelförmig auszubilden, während die gegenüberliegende Seite eben verläuft. Auf diese Weise kann das Befestigungselement beim Einschrauben eine Ansenkung durchführen, so dass dafür gesorgt wird, dass die Anlagefläche auf der Stirnseite des Bundes bündig in der Oberfläche entweder der Konterlattung oder bei Fehlen einer Konterlattung der Isolierschicht selbst liegt.

Eine Schlüsselfläche im Bereich der Trennung zwischen beiden Schaftabschnitten ist nicht mehr vorhanden, da die Schraube durch Angreifen an dem Gewindeabschnitt und dem Bund eingeschraubt werden kann.

Alternativ oder zusätzlich kann der Bund einen Sechskant aufweisen, um die Schraube mit einem Steckschlüssel einschrauben zu können.

In nochmaliger Weiterbildung der Erfindung kann vorgesehen sein, dass der für die Dachkonstruktion vorgesehene Schaftabschnitt derart ausgebildet ist, dass das Gewinde unterbrochen ist. Dadurch werden zwei mit einem Gewinde versehene Gewindeabschnitte auf diesem Schaftabschnitt gebildet, die durch einen gewindefreien Distanzabschnitt voneinander getrennt sind. Damit wird der Tatsache Rechnung getragen, dass das Gewinde nur in den Sparren und in der Konterlattung, die beide aus Holz bestehen, eine tatsächliche Festlegung des Befestigungselements in Längsachse bewirkt, während in dem weichen Dämmmaterial eine Festlegung gar nicht möglich ist. Da bei den Dachkonstruktionen sowohl die Dicke der Sparren als auch die Dicke der Dämmmaterialschicht zumindest annähernd bekannt ist, kann man für jeden speziellen Anwendungsfall eine entsprechend ausgebildete Größe des Befestigungselements verwenden. Zusätzlich wird durch diese Maßnahme die Herstellung des Befestigungselements vereinfacht und verbilligt.

In Weiterbildung der Erfindung kann vorgesehen sein, dass die beiden Gewindeabschnitte ein identisch aufgebautes beziehungsweise ausgebildetes Gewinde aufweisen, oder aber auch ein unterschiedlich geartetes Gewinde. So ist es zum Beispiel denkbar, für bestimmte Anwendungsfälle unterschiedlich große Gewindesteigungen zu verwenden.

In Weiterbildung der Erfindung kann vorgesehen sein, dass der Gewindeabschnitt auf der der Schraubenspitze abgewandten Seite des Bundes ein Feingewinde aufweist.

Die Erfindung schlägt ebenfalls eine Befestigungsanordnung mit den Merkmalen des Anspruchs **6** vor.

Bei dieser Befestigungsanordnung wird das Befestigungselement so in eine Dachkonstruktion eingeschraubt, dass die der Schraubenspitze abgewandte Seite des Bundes bündig mit der Oberfläche der Konterlattung verläuft. Wird nun eine Klammer, die ein Loch aufweist, auf den Bund aufgelegt, so liegt diese Klammer, oder auch ein Profil, mit ihren restlichen Bereichen ebenfalls bündig auf der Oberseite der Konterlattung auf.

Die Erfindung schlägt ebenfalls eine Befestigungsanordnung mit den Merkmalen des Anspruchs 7 vor.

Es ist möglich, diese Klammer dann zur Verhinderung eines Mitdrehens mit einer zusätzlichen Schraube an der Konterlattung festzuschrauben.

Zur Festlegung der Klammer oder des Profils an dem Gewindeabschnitt oberhalb des Bundes kann eine übliche Mutter verwendet werden. Beispielsweise kann auch eine Hutmutter verwendet werden.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die verkürzte Ansicht eines Befestigungselements nach der Erfindung;
- Figur 2: die Anwendung eines solchen Befestigungselements an einer Dachkonstruktion;
- Figur 3: eine der Figur 1 entsprechende Darstellung eines geänderten Befestigungselements nach der Erfindung;
- Figur 4: in vergrößerter Darstellung den Kopfbereich des Befestigungselements der Figur 3.

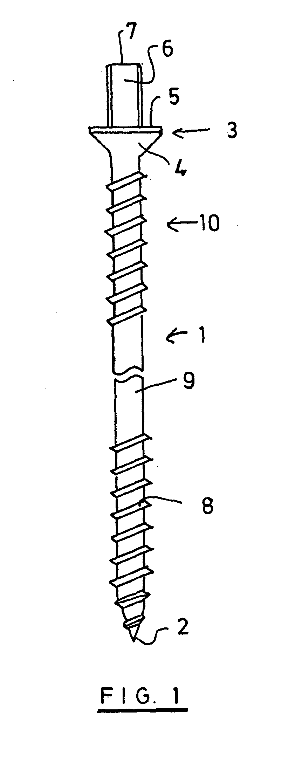

Das in Figur 1 dargestellte Befestigungselement weist einen Schaft 1 auf, der wie eine Schraube aufgebaut ist. Der Schaft 1 enthält eine Schraubenspitze 2, die in einen zylindrischen Teil des Schafts 1 übergeht. Im Bereich des der Schraubenspitze 2 abgewandten Endes weist der Schraubenschaft einen Bund 3 auf, der die Form eines Senkkopfs aufweist. Er enthält also eine kegelförmige der Schraubenspitze 2 zugewandte Unterseite 4 und auf der gegenüberliegenden Stirnfläche eine ebene Anlagefläche 5. Jenseits der ebenen Anlagefläche 5 setzt sich der Schraubenschaft 1 in einen Gewindeabschnitt 6 fort, der ein metrisches Gewinde zur Aufnahme einer Mutter aufweist. Das der Schraubenspitze 2 abgewandte Ende des Befestigungselements weist eine ebene Stirnfläche 7 auf.

Der Schaft 1 enthält ein erstes von der Schraubenspitze 2 ausgehendes Gewinde 8, das sich über einen Teil der Länge des Schraubenschafts 1 erstreckt. An diesen ersten Gewindeabschnitt mit dem Gewinde 8 schließt sich ein gewindefreier Schaftabschnitt 9 an, in dem der Schaft 1 eine glatte Oberfläche aufweist. An diesen gewindefreien Distanzabschnitt 9 schließt sich dann ein zweiter Gewindeabschnitt 10 an, in dem wieder ein Gewinde vorhanden ist, das sich bis etwa unter die Unterseite 4 des Bunds 3 fortsetzt. Im dargestellten Beispiel ist die Steigung des Gewindes 8 in dem ersten Gewindeabschnitt des Schraubenschafts 1 des Befestigungselements identisch zu der Steigung des Gewindes des zweiten Gewindeabschnitts 10.

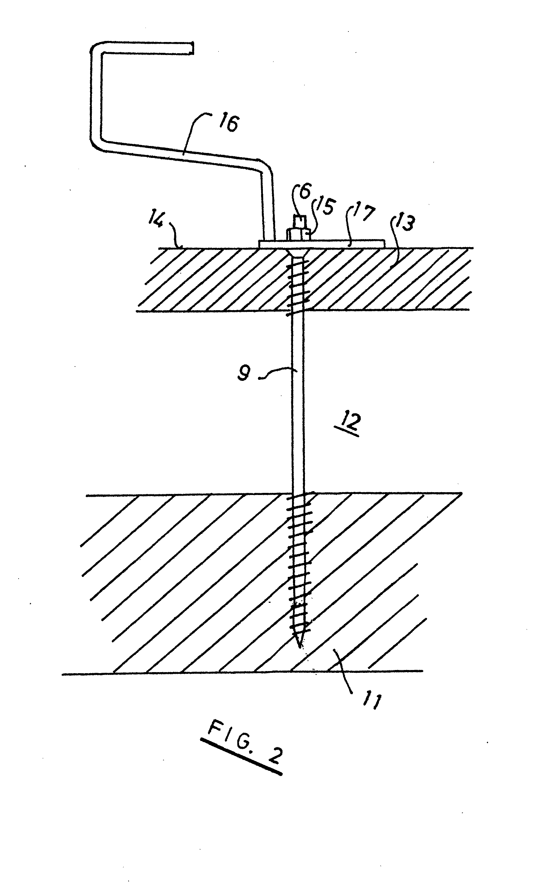

Das in Figur 1 dargestellte Befestigungselement wird folgendermaßen verwendet. Hierzu wird auf die Figur 2 verwiesen. Eine Dachkonstruktion enthält eine Vielzahl von schräg abfallend verlaufenden Dachsparren 11. Oberhalb der Dachsparren 11 ist eine Schicht 12 aus Isoliermaterial aufgebracht, und oberhalb der Schicht 12 aus Isoliermaterial ist die Konterlattung 13 vorhanden. Das Befestigungselement wird nun mithilfe einer auf den Gewindeabschnitt 6 aufgeschraubten, an der Stirnfläche 5 des Bunds 3 anliegenden Mutter 15 durch die Konterlattung eingeschraubt. Das Einschrauben wird so lange fortgesetzt, bis der Bund 3 sich ähnlich wie ein Senkkopf in die Konterlattung 13 einsenkt und die Stirnfläche 5 des Bunds 3 bündig mit der Oberfläche 14 der Konterlattung 13 verläuft. In diesem Zustand liegt der vordere Gewindeabschnitt mit dem Gewinde 8 in dem Sparren 11 und der zweite Gewindeabschnitt 10 in der Konterlattung 13. Der gewindefreie Distanzabschnitt 9 liegt in dem Isoliermaterial 12.

Anschließend wird die Mutter 15 abgeschraubt. Eine Befestigungsklammer 16 weist eine Fußplatte 17 auf, in der ein Loch entsprechend dem Durchmesser des Gewindeabschnitts 6 vorhanden ist. Diese Fußplatte 17 wird also über den Gewindeabschnitt 6 aufgefädelt. Die Unterseite der Fußplatte 17 liegt auf dem Bund 3 und damit auch auf der Oberseite 14 der Konterlattung 13 auf. Anschließend wird die Mutter 15 wieder auf den Gewindeabschnitt 6 aufgeschraubt. Die Befestigungsklammer 16 nimmt dann die dargestellte Position ein. Ein Solarmodul kann von oben her in die Klammer 16 eingeschoben werden.

Falls im Einzelfall eine Dachkonstruktion vorliegt, bei der es keine Konterlattung 13 gibt, kann ebenfalls auf diese Weise eine Befestigung einer solchen Befestigungsklammer 16 erfolgen. Hier wird dann eben die Schraube so weit eingeschraubt, bis die äußere Stirnfläche des Bunds 3 in der Oberfläche der Isolierschicht 12 liegt.

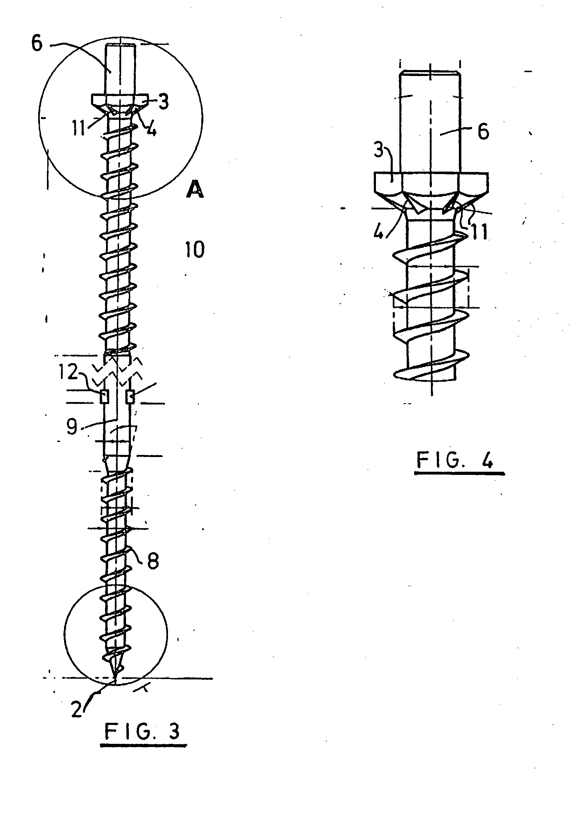

Das in der Figur 3 dargestellte Befestigungselement einer abgeänderten Ausführungsform weist an der Unterseite 4 des Bunds 3 einzelne Fräsrippen 11 auf. Darüber hinaus weist der Bund 3 eine Sechskantform auf, so dass er mit Hilfe eines Steckschlüssels verdreht werden kann.

Der Gewindeabschnitt 6 ist wiederum mit einem metrischen Gewinde zur Aufnahme einer Mutter versehen.

In dem gewindefreien Schaftabschnitt 9, siehe Figur 3, weist der Schaft zwei Flügel 12 auf, die radial weniger weit vorstehen als es dem Gewinde in dem Gewindeabschnitt 10 entspricht.

Ein weiterer Unterschied zwischen dem Befestigungselement der Figur 3 und dem der Figur 1 besteht darin, dass bei der Ausführungsform der Figur 3 und Figur 4 der Schaft in dem sich an die Schraubenspitze 2 anschließenden Bereich einen kleineren Kerndurchmesser als in dem dem Bund 3 angrenzenden Bereich und das Gewinde 8 einen kleineren Spitzendurchmesser aufweist als der Gewindeabschnitt 10.

Anstelle des Sechskants am Bund 3 kann in dem Gewindeabschnitt 6 auch ein Antrieb eingepresst sein.

## Patentansprüche

1. Befestigungselement, mit
1.1 einem Schaft (1),
1.2 einem von dem einen Ende des Schafts (1) ausgehenden eine Schraubenspitze (2) aufweisenden ersten Schaftabschnitt, der
1.3 ein von der Schraubenspitze ausgehendes Holzgewinde (8) aufweist und
1.4 bis zu einem Bund (3) reicht,
1.5 dessen der Schraubenspitze (2) abgewandte Stirnseite einen kurzen zylindrischen Gewindeabschnitt (6) und
1.6 eine den Gewindeabschnitt umgebende ebene Anlagefläche (5) aufweist,
**dadurch gekennzeichnet, dass**
1.7 **die der Schraubenspitze (2) zugewandte Unterseite (4) des Bundes (3) nach Art eines Senkkopfs kegelförmig ausgebildet ist.**

2. Befestigungselement nach Anspruch 1, bei dem der die Schraubenspitze (2) aufweisende Schaftabschnitt einen ersten von der Schraubenspitze (2) ausgehenden Gewindeabschnitt, einen sich daran anschließenden gewindefreien Distanzabschnitt (9) und einen sich an den gewindefreien Distanzabschnitt (9) anschließenden zweiten bis zu dem Bund reichenden Gewindeabschnitt (10) aufweist.

3. Befestigungselement nach Anspruch 1 oder 2, bei dem die beiden Gewindeabschnitte auf der der Schraubenspitze (2) zugewandten Seite des Bundes (3) den gleichen Kerndurchmesser und/oder den gleichen Spitzendurchmesser und/oder die gleiche Steigung aufweisen.

4. Befestigungselement nach einem der vorhergehenden Ansprüche, bei dem die beiden Gewindeabschnitte auf der der Schraubenspitze (2) zugewandten Seite des Bundes (3) unterschiedliche Steigung aufweisen.

5. Befestigungselement nach einem der vorhergehenden Ansprüche, bei dem der von der Stirnseite des Bundes (3) ausgehende Gewindeabschnitt (6) ein Feingewinde aufweist.

6. Befestigungsanordnung mit einer Dachkonstruktion mit Sparren und einer Konterlattung und mit einem Befestigungselement nach einem der vorhergehenden Ansprüche, wobei der erste Gewindeabschnitt in dem Sparren (11) und der zweite Gewindeabschnitt (10) in der Konterlattung (13) angeordnet ist und die Anlagefläche (5) auf der Kopfseite des Bundes (3) bündig mit der Oberseite (14) der Konterlattung (13) verläuft.

7. Befestigungsanordnung mit einer Dachkonstruktion mit Sparren und mit einem Befestigungselement nach einem der vorhergehenden Ansprüche, wobei der erste Gewindeabschnitt in dem Sparren (11) angeordnet ist und die Anlagefläche (5) auf der Kopfseite des Bundes (3) bündig mit der Oberseite einer Hartschaumdämmung (12) verläuft.

8. Befestigungsanordnung nach Anspruch 6 oder 7, bei der die Anlagefläche (5) auf der Kopfseite des Bundes (3) als eine Anlagefläche zur Befestigung einer Klammer (16) dient.

9. Befestigungsanordnung nach Anspruch 8, bei der die Klammer (16) an dem Gewindeabschnitt (6) mithilfe einer Mutter (15) festgelegt ist.

10. Befestigungsanordnung nach Anspruch 9, bei der die Klammer (16) zusätzlich an der Konterlattung (13) festgeschraubt ist.

## Claims

1. A fastening element with
1.1 a shaft (1),
1.2 a shaft section, starting from one end of the shaft (1), having a screw tip (2),
1.3 said shaft section having a wood thread (8) starting from the screw tip and
1.4 extending to a collar (3)
1.5 the face side of which turned away from the screw tip (2) has a short cylindrical threaded section (6) and
1.6 a flat contact surface (5) surrounding the threaded section,
**characterised in that**
1.7 the lower side (4) of the collar (3) facing the screw tip (2) is conical in the form of a countersunk head.

2. The fastening element in accordance with claim 1 in which the shaft section having the screw tip has a first threaded section starting from the screw tip, a thread-free distance section (9) adjoining the first threaded section and a second threaded section (10) adjoining the distance section (9) and extending up to the collar.

3. The fastening element according to claim 1 or 2 in which the two threaded sections on the side of the collar (3) facing the screw tip (2) have the same core diameter and/or the same tip diameter and/or the same pitch.

4. The fastening element according to any one of the preceding claims in which the two threaded sections on the side of the collar (3) facing the screw tip (2) have a different pitch.

5. The fastening element according to any one of the preceding claims in which the threaded section (6) starting from the end face of the collar (3) has a fine thread.

6. The fastening arrangement with a roof structure with rafters and counter battens and with a fastening element according to any one of the preceding claims, whereby the first threaded section is arranged in the rafter (11) and the second threaded section (10) in the counter batten and the contact surface (5) runs flush with the upper side (14) of the counter batten (13) on the head side of the collar (3).

7. The fastening arrangement with a roof structure with rafters and with a fastening element, wherein the first threaded section is arranged in the rafter (11) and the contact surface (5) runs flush with the upper side of a rigid foam insulation (12) on the head side of the collar (3).

8. The fastening arrangement according to claim 6 or 7 in which the contact surface (5) on the head side of the collar (3) acts as a contact surface for fastening a bracket (16).

9. The fastening arrangement according to claim 8 in which the bracket (16) on the threaded section (6) is fixed by means of a nut (15).

10. The fastening arrangement according to claim 9 in which the bracket (16) is also firmly screwed to the counter batten (13).

## Revendications

1. Elément de fixation, comprenant
1.1 une tige (1),
1.2 un premier segment de tige présentant une pointe de vis (2) et partant de l'une extrémité de la tige (1), qui
1.3 présente un filet à bois (8) partant de la pointe de vis et
1.4 va jusqu'à un épaulement (3),
1.5 dont la face avant détournée de la pointe de vis (2) présente un segment à filet (6) cylindrique court et
1.6 une surface d'appui (5) plane entourant le segment à filet,
**caractérisé en ce que**
1.7 la sous-face (4) de l'épaulement (3) tournée vers la pointe de vis (2) est tronconique à la manière d'une tête fraisée.

2. Elément de fixation selon la revendication 1, dans lequel le segment de tige présentant la pointe de vis (2) présente un premier segment à filet partant de la pointe de vis (2), un segment d'écartement (9) sans filet consécutif à celui-ci et un second segment à filet (10) allant jusqu' à l'épaulement (3) consécutif à la section d'écartement (9) sans filet.

3. Elément de fixation selon la revendication 1 ou 2, dans lequel les deux segments à filet sur le côté de l'épaulement (3) tourné vers la pointe de vis (2) présentent le même diamètre de noyau et/ou le même diamètre de pointe et/ou la même pente.

4. Elément de fixation selon l'une des revendications précédentes, dans lequel les deux segments à filet sur le côté de l'épaulement (3) tourné vers la pointe de vis (2) présentent une pente différente.

5. Elément de fixation selon l'une des revendications précédentes, dans lequel le segment à filet (6) partant de la face avant de l'épaulement (3) présente un filet fin.

6. Elément de fixation comprenant une construction de toit avec chevron et contrelattis et un élément de fixation selon l'une des revendications précédentes, sachant que le premier segment à filet est disposé dans le chevron (11) et le second segment à filet est disposé dans le contrelattis (13) et la surface d'appui (5) sur la face avant de l'épaulement (3) est bord à bord avec la face supérieure (14) du contrelattis (13).

7. Elément de fixation comprenant une construction de toit avec chevron et un élément de fixation selon l'une des revendications précédentes, sachant que le premier segment à filet est disposé dans le chevron (11) et la surface d'appui (5) sur la face avant de l'épaulement (3) est bord à bord avec la face supérieure (14) d'une isolation en mousse rigide (12).

8. Elément de fixation selon la revendication 6 ou 7, dans lequel la surface d'appui (5) sur la face avant de l'épaulement (3) sert de surface d'appui pour fixer une fixation (16).

9. Elément de fixation selon la revendication 8, dans lequel la fixation (16) est fixée sur le segment à filet (6) à l'aide d'un écrou (15).

10. Elément de fixation selon la revendication 9, dans lequel la fixation (16) est vissée en plus sur le contrelattis (13).
